# FASCICULE DE BREVET EUROPEEN

(11) **EP 0 360 706 B1**
(45) Date de publication et mention de la délivrance du brevet: **01.12.1993**
(21) Numéro de dépôt: 89420339.7
(22) Date de dépôt: 12.09.1989
(51) Int. Cl.: B60R 9/06

(54) **Plateforme perfectionnnée support de bicyclettes, se positionnant sur les coffres d'automobiles**
Fahrradträger, der auf der Kofferraumhaube angeordnet ist
Bicycle carrier to be positioned on a motor vehicle boot lid

(30) Priorité: 13.09.1988 FR 8812290
(43) Date de publication de la demande: 28.03.1990
(73) Titulaire: Etablissements FIOL S.A., F-42140 CHAZELLES SUR LYON (FR)
(72) Inventeur: Fiol, James, F-42140 Chazelles-sur-Lyon (FR)
(74) Mandataire: Dupuis, François

(56) Documents cités:
- EP-A- 0 141 757
- EP-A- 0 143 065
- FR-A- 2 332 155
- US-A- 2 848 148
- US-A- 3 215 323
- US-A- 4 358 037
- US-A- 4 394 948

## Description

L'invention a pour objet une plateforme support perfectionnée s'adaptant sur des véhicules pour maintenir des bicyclettes, cycles, roues et autres pièces détachées et accessoires similaires.

On connaît déjà des galeries-plateformes s'adaptant sur le toit des véhicules, ces galeries étant agencées pour recevoir verticalement par exemple une ou des bicyclettes dans une position normale d'utilisation ou inversée. Elles sont notamment, non limitativement, commercialisées sous la marque déposée "VITANSEL" appartenant au demandeur. Ces galeries comprennent des barres de toit s'adaptant et se fixant aux parties profilées en forme de glissières ou gouttières formées longitudinalement près de chaque extrémité du toit côté portes. Ainsi les galeries ou barres de toit sont démontables à l'aide de système visécrou.

On connaît également des galeries s'adaptant sur les coffres de véhicules. A la connaissance du demandeur, elles sont essentiellement utilisées pour équiper les véhicules accompagnateurs d'équipes cyclistes professionnelles et elles sont fixées à demeure par boulonnage dans la carrosserie proprement dite.

Les galeries plateformes sont également agencées pour recevoir des ensembles porte-skis, porte-roues.

Cependant et en pratique, on constate qu'il est proposé un type de galeries par application considérée, pour les bicyclettes, pour les skis et autres produits du même type. Il faut donc, pour l'utilisateur potentiel qu'il fasse l'achat des différents équipements séparés en montant sur le véhicule la galerie plateforme appropriée à ses besoins.

Un autre problème consiste dans le fait que la plupart des galeries sont adaptées à un type de véhicules et lorsque l'utilisateur désire renouveler et changer sa voiture, bien souvent il ne peut transférer le matériel galerie qu'il possède sur la nouvelle voiture.

En outre et pour faire face au danger du vol des galeries sur les véhicules, on prévoit des systèmes de sécurité antivols qui augmentent très sensiblement le coût d'achat.

Un autre inconvénient a été constaté qui tient à l'évolution du profil des voitures et notamment par suite des recherches d'aérodynamisme, les formes en glissières ou gouttières sont supprimées. C'est par exemple le cas sur des véhicules du type 405 PEUGEOT et RENAULT R21, et similaires. Il faut alors des équipements spéciaux, coûteux et d'une manipulation peu aisée. Il y a alors adaptation sur le profil de raccordement de la partie toiture du véhicule et la partie encadrement de la porte de moyens particuliers sous forme notamment de boutonnières qui sont cachées par des bandes en matériaux élastiques ou caoutchouc, escamotables en cas d'utilisation.

On connaît par ailleurs des plate-formes s'adaptant sur un coffre de véhicule et comprenant une structure rectangulaire présentant au niveau ou près de ses angles des éléments d'appui articulés et orientables pour s'adapter au profil du coffre, ainsi qu'une pluralité de moyens d'attache entourant le structure et se prolongeant à ses extrémités avec des moyens de fixation s'adaptant et se positionnant dans les ouvertures d'encadrement du coffre. Ce type de plate-forme est connu par exemple du brevet US-A-3215323 qui représente les caractéristiques du préambule de la revendication 1.

Il est fait référence également à l'état de la technique défini par les brevets FR-A-2332155 et EP-A-141 757.

Le but recherché selon l'invention était de proposer un système de plate-forme simple et peu coûteux, standardisé, facilement transportable, enlevable et facilement adaptable sur les coffres ou sur la cinquième porte de tous types de véhicules, et pouvant être très facilement utilisable pour supporter des bicyclettes et leurs composants.

Ces buts et d'autres encore ressortiront bien de la suite de la description.

Selon une première caractéristique la structure est définie par un encadrement fermé, de section carrée, constitué de longerons profilés parallèles deux à deux, avec une ou des barres entretoises, et en ce que l'encadrement autorise la fixation des éléments supports de bicyclettes, cycles et roues s'y rapportant, et comprenant un ou des éléments supports assurant par leur partie supérieure la fixation de fourches de bicyclette, un ou des éléments supports (9) assurant par leur partie supérieure l'appui des boîtes de pédalier des bicyclettes, un ou des supports en forme de fourches rabattables, et en ce que lesdits éléments supports sont conformés à leur partie inférieure pour s'adapter et se fixer directement sur le ou les longerons profilés à l'aide de moyens de fixation et de bridage à démontage rapide, et les éléments supports étant fixés par des moyens de bridage rapportés, et en ce que les supports de boîtes de pédalier sont agencés avec une forme supérieure horizontale d'appui de la boîte, la partie inférieure étant agencée avec une forme en chape s'adaptant sur le longeron correspondant de l'encadrement, cette forme en chape étant disposée dans un plan perpendiculaire à la forme supérieure support de la boîte en autorisant la réversibilité de position de celle-ci.

Pour fixer l'objet de l'invention illustré d'une manière non limitative aux figures des dessins où :
La figure 1 est une vue en perspective d'une plateforme perfectionnée selon l'invention fixée sur le coffre d'une voiture agencée pour recevoir dans un premier exemple des moyens de fixation de bicyclettes ou parties de bicyclettes.
La figure 2 est une vue à grande échelle selon la ligne A-A de la figure 1.
La figure 3 est une vue partielle illustrant un des moyens de piètement et d'appui sur le coffre d'une voiture.

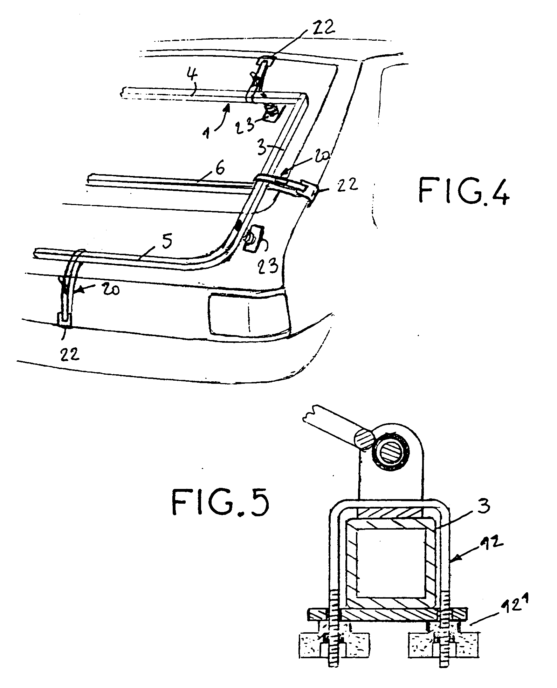

La figure 4 est une vue partielle illustrant l'adaptation des moyens de liaison et d'attache de l'encadrement sur un profil courbe de la partie arrière du véhicule.
La figure 5 est une vue partielle illustrant les moyens de bridage et fixation adaptables sur l'encadrement.

Afin de rendre plus concret l'objet de l'invention, on le décrit maintenant d'une manière non limitative illustrée aux figures des dessins.

Selon l'invention, la plateforme support comprend un encadrement référencé dans son ensemble par (1) constitués de longerons profilés (2-3, 4, 5) recevant des moyens (A) de fixation et de bridage à démontage rapide des éléments supports (B) de produits présentés et maintenus. L'encadrement est associé à des moyens d'appui (C) articulés et orientables pour s'adapter au profil du coffre ou cinquième porte du véhicule sur lequel la plateforme est montée. Une pluralité de moyens d'attaches (D) entourent la section d'encadrement et se prolongent pour présenter des moyens de fixation (E) s'adaptant et se positionnant dans les ouvertures d'encadrement du coffre et de la cinquième porte dudit véhicule.

Plus particulièrement, dans une mise en oeuvre, l'encadrement (1) de forme sensiblement rectangulaire est établi par des profilés ou longerons (2, 3, 4, 5) de section carrée par exemple et s'ajustant par soudure ou autrement. Une ou des barres (6) entretoises peuvent être disposées à l'intérieur de l'encadrement présenté en joignant les longerons latéraux (2, 3) ou longitudinaux (4, 5).

Sur les longerons (4, 5) sont disposés les moyens-supports (B) de bicyclettes et parties de bicyclettes,
Dans le cas particulier des bicyclettes, de tous types, course, tout terrain, ..., la plateforme peut être équipée d'au moins une, ou deux ou trois bicyclettes ou plus.

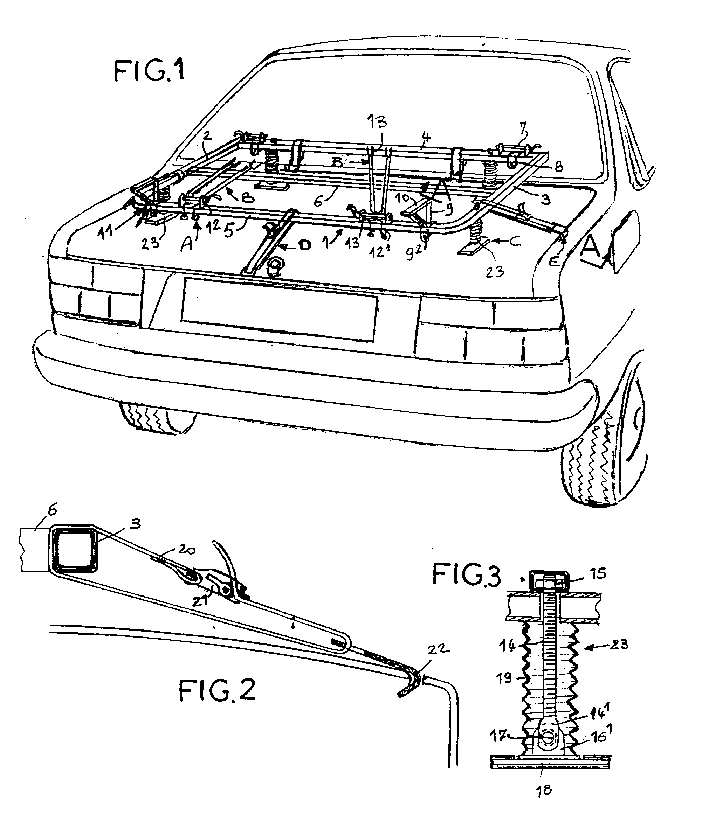

Par exemple, selon l'exemple illustré figure 1, le longeron (4) avant reçoit par exemple au moins un et généralement deux supports (7) de fourche de vélo à blocage rapide, agencés à leur partie supérieure pour coopérer avec l'extrémité de ladite fourche, et à leur partie inférieure avec une forme en U en étrier (8) s'adaptant par chevauchement et se fixant en position réglable le long du longeron considéré.

L'autre longeron (5) reçoit en position en regard des supports (7) de fourche des éléments supports (9) de boîte de pédalier. Ces supports sont agencés avec une forme supérieure de grande longueur par exemple triangulée avec, à la partie supérieure horizontale (9.1) un patin (10) de protection. La partie inférieure du support (9) est agencée directement ou de manière rapportée avec une forme en chape (9.2) s'adaptant et se fixant par chevauchement ou autre sur le profil du longeron. Cette forme en chape est disposée dans un plan perpendiculaire à la forme supérieure support de la boîte de pédalier de sorte qu'il est possible de rendre réversible en position ledit support pour adapter sa position par rapport à l'encadrement en égard du type de bicyclettes montées.

Il est prévu en outre une ou des courroies de fixation (11) susceptibles d'entourer un ou des tubes du cadre de bicyclette et en particulier le tube de selle, ou le tube diagonal.

Il est également prévu le long des longerons (4 et 5), un ou des éléments-supports (12) de fourche rabattable (13) susceptible de recevoir la roue avant détachée de la bicyclette. Les supports (12) sont également maintenus fixés au longeron par des bridages (12.1) particuliers illustrés figure 6. Ces brides sont constitués avec une tige profilée en U dont les extrémités présentent un filetage susceptible de recevoir un écrou de blocage à ailettes par exemple avec une plaquette intermédiaire. La bride entoure ainsi l'encadrement et maintient l'élément support de fixation du produit.

Selon une autre disposition l'encadrement ainsi décrit avec différents éléments-supports de cycles ou pièces de cycles est agencée avec des éléments d'appui sur le coffre ou la cinquième porte du véhicule. Plus particulièrement, les éléments d'appui référencés dans leur ensemble par (23) qui forment piètement sont agencés de la manière illustrée figure 3. Il est prévu avantageusement près des angles de l'encadrement, quatre éléments d'appui comprenant une tige filetée (14) débordant vers le bas et fixée par sa partie supérieure sur la face de dessus de l'encadrement par un boulonnage (15).

La tige est agencée à sa partie inférieure avec une partie méplate (14.1) introduite avec les branches (16.1) d'une chape-support (16) articulée, un vis de liaison et de raccordement (17) assurant le blocage de l'ensemble. Sur la chape-support est disposé un patin (18) en caoutchouc ou autre matériau de protection. La chape (16) peut être sensiblement montée articulée pour s'adapter au mieux au profil du coffre du véhicule ou de sa cinquième porte. En outre, il est prévu autour de la tige un soufflet (19) en matériau plastique faisant office de cadre et de décoration.

L'orientation des parties d'appui sur le coffre peut varier et être choisie selon les besoins.

Afin d'assurer le positionnement et la fixation de la plateforme, on utilise une pluralité de moyens d'attaches D agencées et réparties en plusieurs points de l'encadrement. Les moyens d'attaches sont avantageusement des sangles comprenant tout d'abord à l'une de leurs extrémités un corps (20) d'attache, de serrage et de renvoi (21) autorisant l'engagement et le réglage en position et longueur de boucle de la sangle. Un crochet de fixation (22) en matériau plastifié est disposé coulissant le long de la sangle. Celle-ci est de préférence non élastique. On pourrait toutefois prévoir une sangle élastique qui serait alors mise en tension au moment de la fixation et du positionnement de la plateforme sur le coffre ou la cinquième porte du véhicule.

Les crochets des sangles s'adaptent alors dans l'interstice de l'ouverture d'encadrement du coffre ou cinquième porte en y étant fixés. Le montage est simple, rapide et fiable. Il n'engendre aucune détérioration de la carrosserie du véhicule.

Les moyens d'attache peuvent être des brides présentant le cas échéant des parties de protection en matériau souple, caoutchouc ou autres lors des contacts avec la carrosserie du véhicule.

L'utilisation de ces moyens d'attaches, sangles, brides, est particulièrement avantageuse car ils peuvent s'adapter au profil droit, courbe de la zône du coffre ou cinquième porte adjacente à l'encadrement d'ouverture, et cela sans risque de détérioration.

Ainsi, on prévoit généralement en fonction de la charge, l'utilisation de cinq attaches du type précité, une en liaison avec chaque longeron latéral, deux autres avec le longeron avant et un autre avec le longeron arrière. En vue d'un montage et démontage rapide, l'utilisateur a besoin de régler, pour un type de véhicule donné, trois attaches pouvant jouer ensuite sur l'enlèvement de l'une des attaches latérales et celle du longeron arrière. La plateforme peut ainsi être facilement manipulée et rangée dans le véhicule en cas de non utilisation.

Les avantages ressortent bien de l'invention. On souligne en particulier les aspects pratiques et fonctionnels de la plateforme, sa standardisation de fabrication, et les multiples possibilités offertes à l'utilisateur pour son équipement. En outre, de par sa simplicité de montage et d'équipement, son faible coût de revient, elle est particulièrement adaptée aux exigences du marché. En étant disposé à l'arrière du véhicule, on obtient corollairement des économies non négligeables sur la consommation d'essence des véhicules par une diminution de la prise au vent.

La plateforme selon l'invention est réalisée à partir d'éléments modulaires laissant toute souplesse dans son agencement.

## Revendications

1. Plate-forme support perfectionnée s'adaptant sur un coffre d'un véhicule et comprenant une structure rectangulaire présentant au niveau ou près de ses angles des éléments d'appui (C) articulés et orientables pour s'adapter au profil du coffre, ainsi qu'une pluralité de moyens d'attache (D) entourant la structure et se prolongeant à ses extrémités avec des moyens de fixation (E) s'adaptant et se positionnant dans les ouvertures d'encadrement du coffre,
ladite plate-forme étant caractérisée en ce que, la structure est définie par un encadrement (1) fermé, de section carrée, constitué de longerons profilés (2,3,4,5) parallèles deux à deux, avec une ou des barres entretoises, et en ce que sur l'encadrement sont fixés des éléments supports de bicyclettes, cycles et roues s'y rapportant, et comprenant un ou des éléments supports (7) assurant par leur partie supérieure la fixation de fourches de bicyclette, un ou des éléments supports (9) assurant par leur partie supérieure l'appui des boîtes de pédalier des bicyclettes, un ou des supports (12) en forme de fourches (13) rabattables, et en ce que lesdits éléments supports de fourche et de boîtes de pédalier (7,9) sont conformés à leur partie inférieure pour s'adapter et se fixer directement sur le ou les longerons profilés (4,5) à l'aide de moyens de fixation et de bridage (A) à démontage rapide, et les éléments supports (12) en forme de fourche étant fixés par des moyens de bridage rapportés, et en ce que les supports de boîtes de pédalier sont agencés avec une forme supérieure horizontale (9.1) d'appui de la boîte, la partie inférieure étant agencée avec une forme en chape (9.2) s'adaptant sur le longeron correspondant de l'encadrement, cette forme en chape étant disposée dans un plan perpendiculaire à la forme supérieure support de la boîte en autorisant la réversibilité de position de celle-ci.

2. Plate-forme selon la revendication 1, caractérisée en ce que les éléments d'appui (C) formant piètement (23) comprennent une tige filetée (14) boulonnée à sa partie supérieure par rapport aux longerons de fixation, ladite tige étant agencée dans sa partie inférieure avec une partie méplate (14.1) introduite entre les branches (16.1) d'une chape support (16) articulée et fixée par une vis de liaison et de raccordement (17), ladite chape support recevant un patin (18) en matériau souple de protection, un soufflet (19) étant disposé autour de la tige (14) en faisant office de cache et de décoration.

## Claims

1. Improved supporting platform designed to be fastened to an automobile trunk and consisting of a rectangular frame with hinged, directional frame rests (C) near or at the angles to mate the frame to the trunk lid as well as several straps (D) fitted with end clamps (E) attached to the four frame sides, gripping the trunk lid edges,
said platform being characterized in that it is a closed frame (1) of square cross section, facing structural spars (2, 3, 4, 5) and one or more cross-braces and in that detachable bicycle, cycle and wheel supports are fixed to it, also including one or more supporting parts (7), the tops of which act as bicycle fork rests, one or more supporting parts (9), the tops of which act as bicycle crank gear guard rests, one or more hinged brackets (12) with fork-like ends (13) and in that the bottom of said fork and guard rests (7, 9) are designed to adapt and be fastened directly to the structural spar(s) (4, 5) with snap-locks (A), the fork rests (12) being fastened with detachable clamping parts, and in that the crank gear rest tops (9.1) are horizontal to fit the crank gear guards, while the crank gear rest feet or base-plates (9.2) fit the matching structural frame spar, the base-plate being perpendicular to the crank gear rest top, causing it to be reversible.

2. Platform as claimed in claim 1, characterized in that the frame rests (C) acting as spacers (23) incorporate a threaded rod (14) bolted to the structural spar at the top and hinged between the frame rest baseplate (16) forks (16.1) with a bolt (17) through the flat end (14.1) at the bottom, said base-plate being equipped with a pad (18) encased in supple, protective material, the threaded rod (14) being covered by a decorative bellows (19).

## Patentansprüche

1. Weiterentwickelte Fahrradhalterung zur Befestigung auf einem Kfz-Kofferraum, bestehend aus einer rechteckigen Rahmenstruktur, die auf Höhe bzw. in der Nähe der Winkel gelenkige und verstellbare Stützelemente (C) zur Anpassung an das Kofferraumprofil sowie mehrere Haltebänder (D) aufweist, die die Rahmenstruktur umgeben und am anderen Ende Befestigungsstücke (E) besitzen, die auf den Rand der Kofferraumhaube gesetzt werden,
wobei die besagte Halterung dadurch gekennzeichnet ist, daß die Struktur einen geschlossenen Rahmen (1) mit quadratischem Querschnitt aufweist, bestehend aus jeweils zwei parallelen Profilträgern (2,3,4,5) mit einem oder mehreren Zwischenstäben; und dadurch, daß auf dem Rahmen passende Halterungen für Fahrräder und Räder befestigt sind, darunter eine oder mehrere Halterungen (7), an deren oberem Teil die Fahrradgabeln befestigt werden, eine oder mehrere Halterungen (9), deren oberer Teil die Auflage der Tretkurbellager der Fahrräder gewährleistet, und eine oder mehrere umlegbare gabelförmige (13) Halterungen (12); und dadurch, daß die besagten Gabel- und Tretkurbellagerhalterungen (7,9) im unteren Teil so ausgelegt sind, daß sie sich mit Hilfe von schnell abnehmbaren Befestigungs- und Einspannvorrichtungen (A) direkt an dem bzw. den Profilträger(n) (4,5) aufsetzen und befestigen lassen, wobei die gabelförmigen Halterungen (12) durch aufgesetzte Einspannvorrichtungen befestigt werden; und dadurch, daß die Tretkurbellagerhalterungen eine obere waagrechte Schiene (9.1) zum Auflegen des Kurbellagers besitzen und der untere Teil eine Kappenform (9.2) aufweist, die auf den entsprechenden Längsträger des Rahmens paßt, wobei die Kappenform senkrecht zur oberen Kurbellagerhalterung angeordnet ist und deren Positionsumkehr ermöglicht.

2. Fahrradhalterung nach Anspruch 1, dadurch gekennzeichnet, daß die fußartigen (23) Stützelemente (C) eine im oberen Teil an den Befestigungsträgern verbolzte Gewindespindel (14) besitzen, wobei die Spindel im unteren Teil ein flaches Stück (14.1) aufweist, das zwischen den Bügeln (16.1) einer gelenkigen Haltekappe (16) eingeführt und durch eine Verbindungs- und Anschlußschraube (17) befestigt wird, wobei die Haltekappe einen Schuh (18) aus elastischem Schutzmaterial aufnimmt und die Spindel (14) zur Abdeckung und Verschönerung durch einen Balg (19) umgeben ist.
